# EUROPÄISCHE PATENTSCHRIFT

(11) **EP 0 813 494 B1**
(45) Veröffentlichungstag und Bekanntmachung des Hinweises auf die Patenterteilung: **01.09.1999**
(21) Anmeldenummer: 96903856.1
(22) Anmeldetag: 04.03.1996
(51) Int. Cl.: B65G 54/02

(54) **VORRICHTUNG ZUM TRANSPORTIEREN VON PRODUKTEN MITTELS EINES LINEARMOTORS**
DEVICE FOR CONVEYING PRODUCTS BY MEANS OF A LINEAR MOTOR
DISPOSITIF DE TRANSPORT DE PRODUITS AU MOYEN D'UN MOTEUR LINEAIRE

(30) Priorität: 06.03.1995 CH 62795
(43) Veröffentlichungstag der Anmeldung: 29.12.1997
(73) Patentinhaber: SIG Pack Systems AG, 8222 Beringen (CH)
(72) Erfinder: LOEWENTHAL, Horst, D-79761 Tiengen (DE); DIEM, Markus, CH-8203 Schaffhausen (CH)
(74) Vertreter: Münch, Otto, Dipl.-Ing.
(86) Internationale Anmeldenummer: CH9600072
(87) Internationale Veröffentlichungsnummer: WO9627544

(56) Entgegenhaltungen:
- WO-A-90/08086
- US-A- 4 624 617
- US-A- 4 704 568

## Beschreibung

Aus der EP-B-316 990 ist eine Vorrichtung zum Transport, Stauen in Reihenfolge und zum Ausschieben von Produkten in einer Abgabestation beschrieben. Die Vorrichtung hat ein umlaufendes Band, auf welchem mehrere Schalen kraftschlüssig gehalten sind. Die Schalen können in einer Aufgabestation sowie in der Abgabestation durch je einen mechanischen Stopper zurückgehalten werden. Nachteilig an dieser Vorrichtung sind die aufwendigen und störanfälligen mechanischen Antriebs- und Synchronisationsmittel.

In der US-A-4624617 ist eine Vorrichtung zum Transportieren von Halbleiter-Scheiben beschrieben. Sie hat eine Anzahl Wagen, welche auf einer geradlinigen Führung magnetisch geführt sind. Die Auflageflächen der Wagen sind horizontal und gabelförmig. Durch Anheben bzw. Absenken benachbarter Wagen können die Halbleiterscheiben vom einen zum nächsten Wagen übergeben werden. Längs der Führung ist eine Vielzahl von Spulen mit horizontaler, sich in Transportrichtung erstreckender Spulenachse angeordnet, welche mit flachen unter den Auflageflächen der Wagen angeordneten Permanentmagneten zusammen Liniearmotoren bilden. Längs der Führung sind lichtimmitierende Dioden und Fototransistoren angeordnet, um die Position der Wagen zu bestimmen. Die Fototransistoren sind mit einer Steuereinheit verbunden. Mit dieser Vorrichtung können nur relativ geringe Transportgeschwindigkeiten erreicht werden.

Der vorliegenden Erfindung liegt die Aufgabe zugrunde, die obigen Nachteile zu vermeiden. Diese Aufgabe wird durch die Merkmalskombination der Ansprüche gelöst.

Nachfolgend wird ein Ausführungsbeispiel der Erfindung anhand der Zeichnungen erläutert. Darin zeigt:
- Figur 1: eine schematische Draufsicht auf die Vorrichtung,
- Figur 2: eine schematische Seitenansicht,
- Figur 3: einen vergrösserten Ausschnitt aus der Darstellung nach Figur 2 ohne Führung,
- Figur 4: einen Schnitt längs der Linie IV-IV in Figur 3,
- Figur 5: eine Seitenansicht der Spulen,
- Figuren 6 und 7: einen Querschnitt bzw. Längsschnitt durch Spulen und Permanentmagnete,
- Figur 8: eine Seitenansicht der Spulen im Umlenkbereich, und
- Figur 9: einen Querschnitt durch eine zweite Ausführungsform.

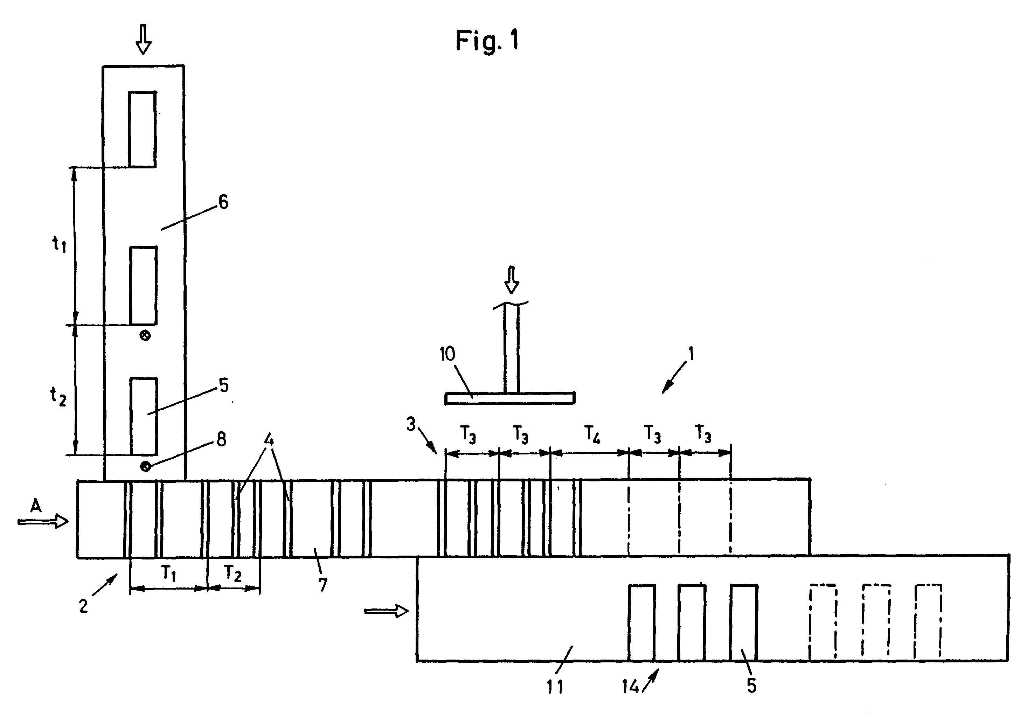

Die Vorrichtung 1 nach Figur 1 erstreckt sich zwischen einer Aufgabestation 2 und einer Abgabestation 3. In der Aufgabestation 2 wird jeweils ein Wagen 4 mit einem Produkt 5 durch ein Förderband 6 beschickt. Die Produkte 5 werden auf dem Band 6 in unregelmässigen Abständen t1, t2 angeliefert. Die Wagen 4 sind auf einer Führung 7 einzeln fahrbar. Mindestens am stromabwärtigen Ende des Bandes 6 ist eine Lichtschranke 8 angeordnet. Das Band 6 wird beim Eintreffen eines Produktes 5 an der Lichtschranke 8 gestoppt, wenn nicht ein Wagen 4 an der Aufgabestation 2 steht. Nachdem das Produkt 5 auf den Wagen 4 in der Aufgabestation 2 aufgeschoben ist, wird dieser Wagen 4 gegen die Abgabestation 3 verschoben. In der Abgabestation 3 werden die Wagen z.B. zu Dreier-Gruppen gruppiert angehalten und die Produkte 5 durch einen Stössel 10 gruppenweise auf ein Abgabeförderband 11 gestossen. Sobald die Gruppe 14 auf das Band 11 geschoben ist, wird dieses um einen Takt vorgeschoben, so-dass die Produktegruppen 14 auf dem Band 11 in regelmässigen Abständen z.B. einer Sammelverpackungsmaschine zugeführt werden können. Die leeren Wagen 4 werden auf einer Rücklaufstrecke zur Aufgabestation 2 zurückgeführt.

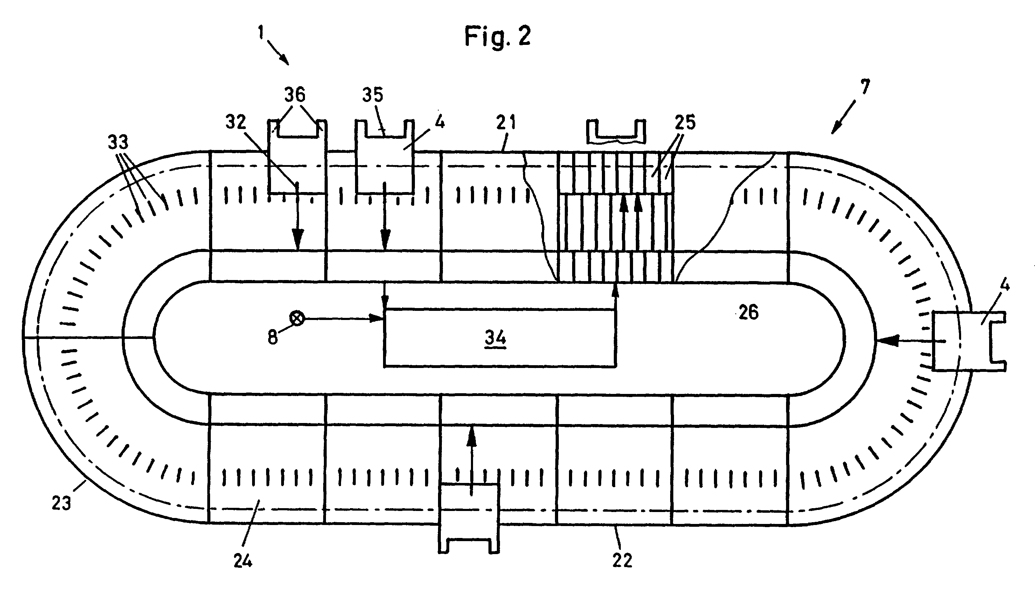

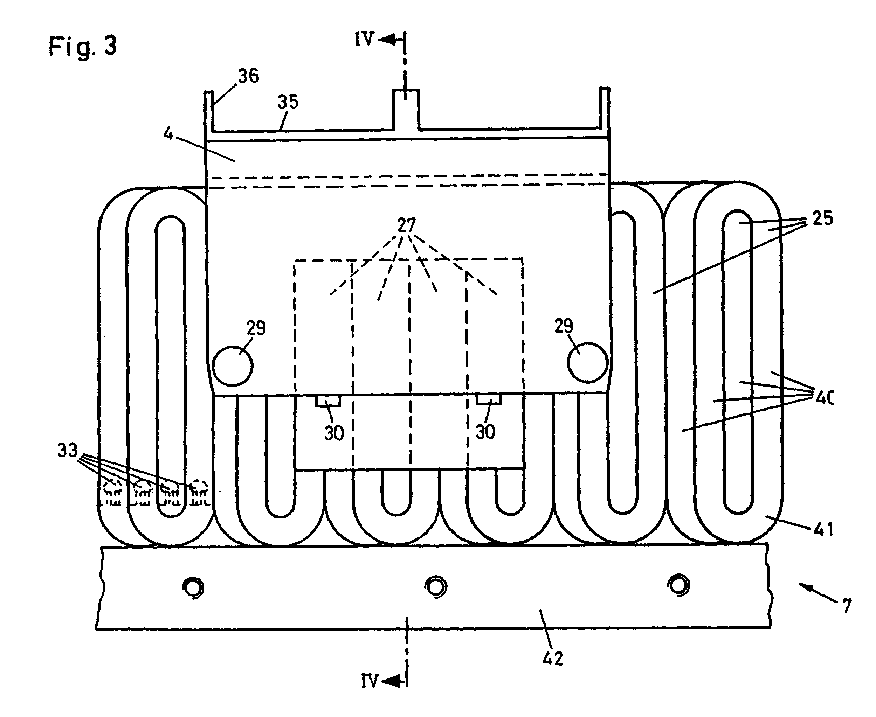

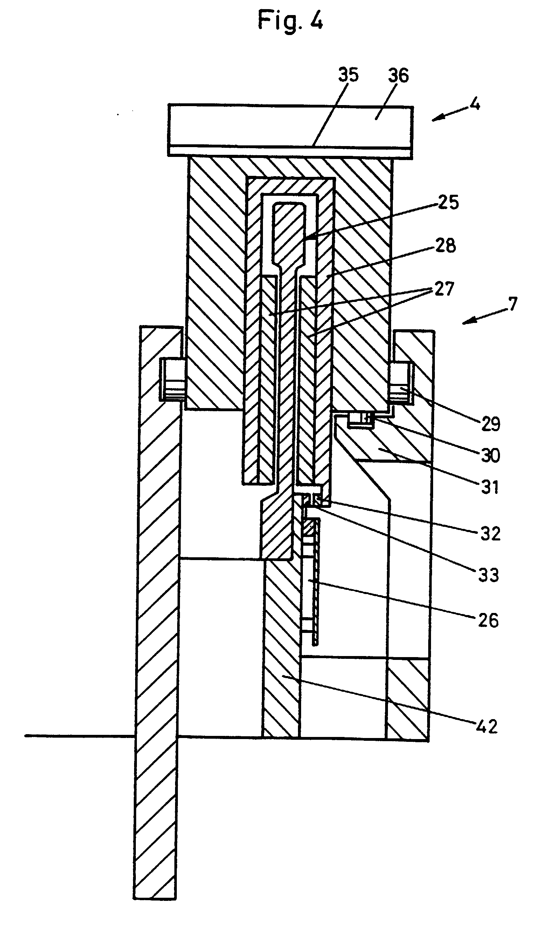

In Figur 2 ist schematisch eine Seitenansicht der Vorrichtung 1 dargestellt. Die Führung 7 besteht aus einer flachliegenden, in einer Vertikalebene angeordneten, geschlossenen, ringförmigen Bahn mit einer oberen geradlinigen Arbeitsstrecke 21, der unteren, geradlinigen Rücklaufstrecke 22 sowie zwei diese Strecken verbindende Halbkreisbogen 23. Die Führung 7 ist in mehrere Segmente 24 unterteilt. Jedes der geradlinigen Segmente 24 enthält z.B. zwölf hintereinander angeordnete Luftspulen 25, deren Spulenachse senkrecht zur Ebene der Führung 7 steht. Jedes Segment 24 hat eine Steuereinheit 26, welche die einzelnen Spulen 25 dieses Segmentes 24 ansteuert. Jeder Wagen 4 hat auf gegenüberliegenden Seiten der Spulen 25 je mindestens einen Permanentmagneten 27 (Figur 3), der mit den Spulen 25 zusammen einen Linearmotor bildet. Die gegenüberliegenden Permanentmagnete 27 sind durch ein U-förmiges Weicheisenjoch 28 (Figur 4) miteinander verbunden, das die Spulen 25 oben umgreift. Zwischen den Spulen und den Permanentmagneten 27 ist ein enger Spalt von z.B. etwa 1 mm. Die Wagen 4 sind durch vier Laufrollen 29 und zwei Seitenführungsrollen 30 in Schienen 31 der Führung 7 geführt.

Jeder Wagen 4 hat zusätzlich einen kleinen Positionsmeldemagneten 32, der mit einer Reihe von hintereinander angeordneten, linearen Halleffekt-Fühlern 33 an der Führung 7 zusammenwirkt. Die Fühler 33 haben z.B. einen regelmässigen Abstand von ca. 7 mm voneinander. Durch Interpolation der Signale benachbarter Fühler kann die Position des Wagens 4 stufenlos exakt bestimmt werden. Die Fühler 33 sind ebenfalls mit der betreffenden Steuereinheit 26 verbunden. Sämtliche Steuereinheiten 26 sind von einer Zentralsteuerung 34 aus gesteuert, welche zudem die Signale der Lichtschranke 8 empfängt. Zur Aufnahme der Produkte 5 haben die Wagen 4 eine ebene Auflage 35 mit dazu senkrechten Seitenwänden 36, welche sich quer zur Transportrichtung A erstrecken.

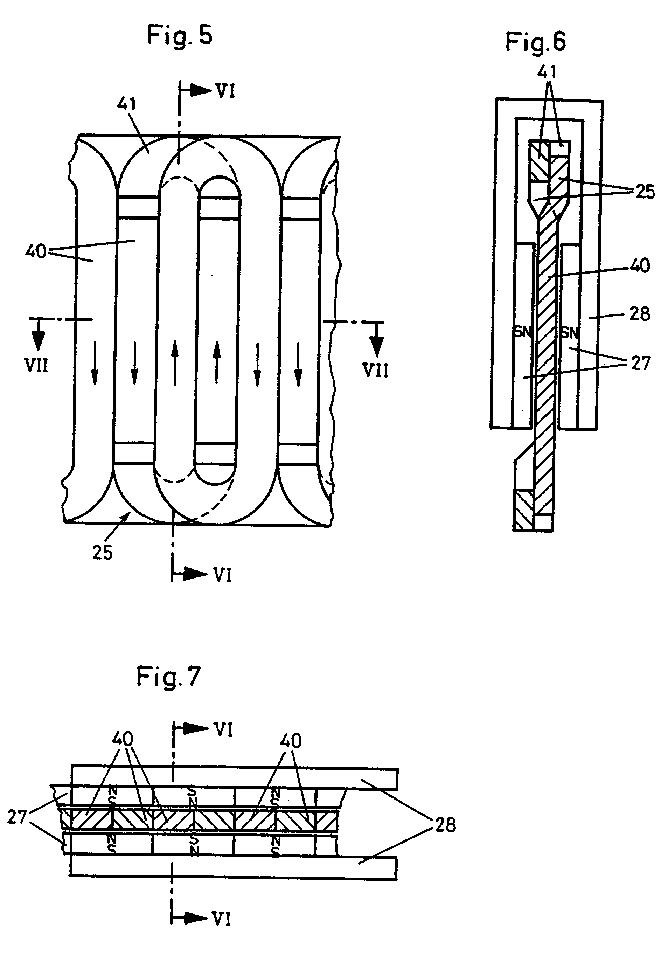

Wie aus Figuren 3 und 5 hervorgeht, haben die Spulen 25 einen langgestreckten, ringförmigen Umriss mit relativ langen, geradlinigen Schenkeln 40 und halbkreisförmigen Verbindungsbogen 41. Die Spulen 25 sind paarweise überlappt, wobei jeweils ein Schenkel 40 der einen Spule 25 des Paares im Zwischenraum zwischen den beiden Schenkeln 25 der andern Spule desselben Paares angeordnet ist. Im Bereich der Bögen 41 ist mindestens die eine Spule 25 aus der gemeinsamen Ebene der Spulenschenkel 40 herausgebogen (Figur 6). Die Spulen 25 jedes Segmentes 24 sind miteinander z.B. durch Kunstharz verklebt und auf eine gemeinsame Trägerplatte 42 aufgeleimt, auf welcher auch die zugehörige Steuereinheit 26 mit den Fühlern 33 befestigt ist.

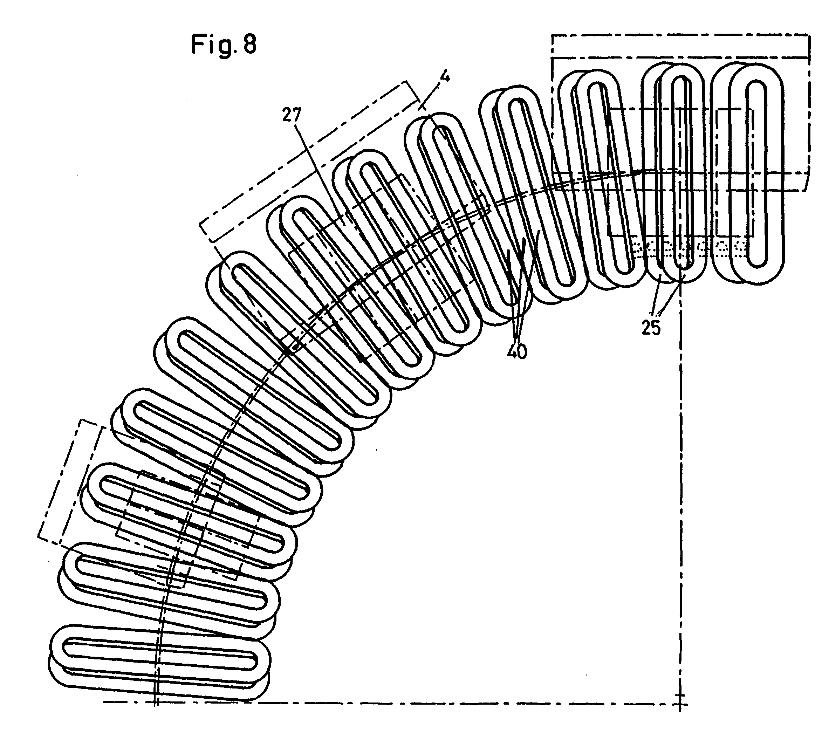

Auf der Arbeitsstrecke 21, auf welcher eine relativ hohe Beschleunigung oder Verzögerung der Wagen 4 erforderlich sein kann, ist die Breite der Schenkel 40 nur geringfügig kleiner als die lichte Weite zwischen den Schenkeln 40 einer Spule 25, damit ein hoher magnetischer Fluss erzielt werden kann. Auf der Rücklaufstrecke 22 und in den Bögen 23 können dagegen die Spulen 25 weniger Querschnitt aufweisen, was in Figur 8 angedeutet ist. Insbesondere bei den Spulen 25 auf der Arbeitsstrecke 21, die eine relativ hohe Leistung erbringen, kann eine Zwangskühlung, z.B. mittels eines Luftstroms, vorgesehen sein.

Im Betrieb wird die Bewegung sämtlicher Wagen durch die Zentralsteuerung 34 derart überwacht, dass beim Beladen ein Wagen 4 in der Station 2 stillsteht und zum Entladen eine Gruppe von Wagen 4 im vorgegebenen Abstand in der Station 3 stillsteht, und dass die Wagen 4 dazwischen mit vorgegebenen Beschleunigungen, Geschwindigkeiten und Minimalabständen fahren. Die Zentralsteuerung 34 gibt also die Sollwerte für die Steuereinheiten 26 vor, während die Feinsteuerung der Wagen anhand der Positions-Ist-Wert-Rückmeldungen durch die Fühler 33 durch die Steuereinheiten 26 erfolgt.

Die Vorrichtung ist betriebssicher und leise im Betrieb. Das Zusammenstossen von Wagen kann sicher vermieden werden. Die Synchronisation ist durch eine elektronische Steuerung zu realisieren. Durch Umprogrammieren der Steuerung kann die Vorrichtung einfach an andere Betriebsweisen und z.B. an andere Wagenlängen oder Anzahl von Wagen 4 angepasst werden. Die Länge der Arbeitsstrecke 21 kann durch Hinzufügen oder Entfernen von Segmenten 24 einfach an den Bedarf angepasst werden. Daher ist die Vorrichtung sehr flexibel.

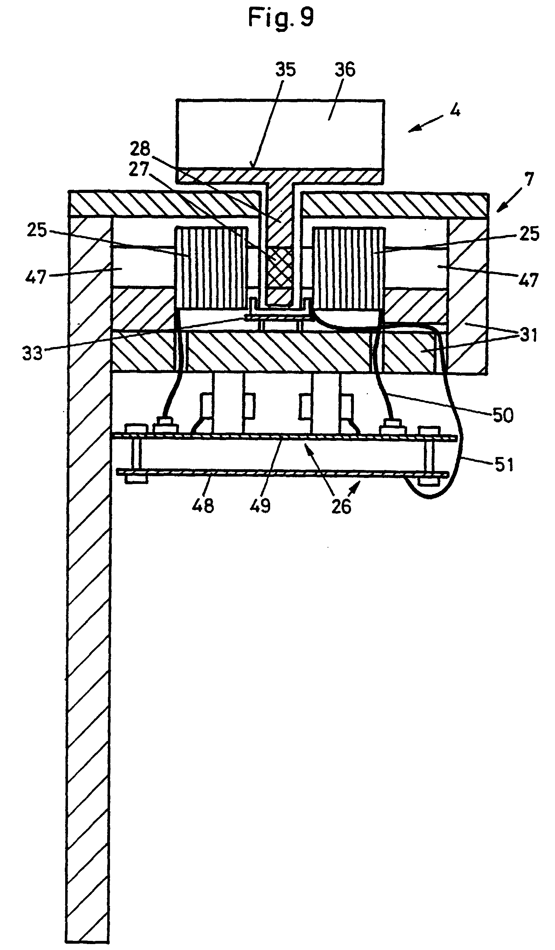

Bei der Ausführungsform nach Figur 9 haben die Wagen 4 nur einen einzigen Schenkel 28, an welchem ein Permanentmagnet 27 oder eine Reihe von Permanentmagneten 27 befestigt ist bzw. sind. Beidseits des Schenkels 28 sind je eine Kette von Spulen 25 angeordnet, welche in diesem Ausführungsbeispiel nicht Luftspulen sind, sondern Eisenkerne 47 haben. Die Steuereinheit 26 besteht aus einer Mikroprozessor-Platte 48 und einer Leistungselektronik-Platte 49. Diese ist über Kabel 50 mit den Spulen 25 verbunden. Die Fühler 33 sind über ein weiteres Kabel 51 mit der Platte 48 verbunden. Die Wagen 4 sind über nicht dargestellte Führungselemente, z.B. Magnetlager, in der Führung 7 geführt.

## Patentansprüche

1. Vorrichtung zum Transportieren von Produkten (5) nach Bedarf zwischen verschiedenen Stationen, insbesondere zwischen einer Aufgabestation (2) und einer Abgabestation (3), umfassend eine stationäre Führung (7), in welcher mehrere Förderelemente (4) zur Aufnahme der Produkte (5) beweglich geführt sind, wobei an der Führung (7) eine Vielzahl von hintereinander angeordneten, separat gesteuerten Spulen (25) mit annähernd horizontalen Spulenachsen angeordnet ist und jedes Förderelement (4) mindestens einen Permanentmagneten (27) aufweist, der in Kombination mit den Spulen (25) einen Linearmotor bildet, wobei an der Führung (7) eine Vielzahl von hintereinander angeordneten Positionsfühlern (33) angeordnet ist, um die Position der Förderelemente (4) zu messen, wobei jedes Förderelement (4) einen U-förmigen Halter (28) mit zwei Schenkeln umfasst, dadurch gekennzeichnet, dass die Spulenachsen annähernd quer zur Transportrichtung verlaufen, dass die mit den Spulen den Linearmotor bildenden Permanentmagnete (27) innenseitig an den Schenkeln befestigt sind, und dass die Spulen einen Kamm bilden, der zwischen diese Permanentmagnete hineinragt.

2. Vorrichtung zum Transportieren von Produkten (5) nach Bedarf zwischen verschiedenen Stationen, insbesondere zwischen einer Aufgabestation (2) und einer Abgabestation (3), umfassend eine stationäre Führung (7), in welcher mehrere Förderelemente (4) zur Aufnahme der Produkte (5) beweglich geführt sind, wobei an der Führung (7) eine Vielzahl von hintereinander angeordneten, separat gesteuerten Spulen (25) mit annähernd horizontalen Spulenachsen angeordnet ist und jedes Förderelement (4) mindestens einen Permanentmagneten (27) aufweist, der in Kombination mit den Spulen (25) einen Linearmotor bildet, wobei an der Führung (7) eine Vielzahl von hintereinander angeordneten Positionsfühlern (33) angeordnet ist, um die Position der Förderelemente (4) zu messen, dadurch gekennzeichnet, dass die Spulenachsen annähernd quer zur Transportrichtung verlaufen, dass jedes Förderelement (4) einen plattenförmigen Schenkel (28) hat, an welchem mindestens einer der mit den Spulen den Linearmotor bildenden Permanentmagnete (27) befestigt ist, dass an der Führung (7) beidseits des Schenkels (28) je eine Vielzahl der Spulen (25) angeordnet ist, und dass die beiden Spulenreihen einen Schlitz bilden, in welche der Schenkel (28) mit dem Permanentmagneten (27) hineinragt.

3. Vorrichtung nach Anspruch 1 oder 2, wobei die Förderelemente (4) einen Boden (35) und Seitenwände (36) quer zur Transportrichtung (A) haben.

4. Vorrichtung nach einem der Ansprüche 1 bis 3, wobei die Führung (7) eine geradlinige Arbeitsstrecke (21) und zwei beidseitig daran anschliessende, bogenförmige Abschnitte (23) hat.

5. Vorrichtung nach einem der Ansprüche 1 bis 4, wobei an jedem Förderelement (4) ein Geberelement (32), vorzugsweise ein wesentlich kleinerer, zusätzlicher Permanentmagnet, befestigt ist, und die Positionsfühler (33) mit diesem Geberelement (32) zusammenwirken.

6. Vorrichtung nach einem der Ansprüche 1 bis 5, wobei jede Spule (25) zwei Schenkel (40) aufweist, die länger sind als ihr mittlerer Abstand.

7. Vorrichtung nach Anspruch 6, wobei der Permanentmagnet (27) in Höhenrichtung kürzer ist als die Schenkellänge der Spulen (25).

8. Vorrichtung nach einem der Ansprüche 1 bis 7, wobei die Spulen (25) paarweise überlappt angeordnet sind.

9. Vorrichtung nach einem der Ansprüche 1 bis 8, wobei die Spulen (25) in mindestens einem Bereich der Führung (7), insbesondere im Rücklaufbereich (22), einen kleineren Querschnitt haben als in einer Arbeitsstrecke (21) der Führung (7).

10. Vorrichtung nach einem der Ansprüche 1 bis 9, wobei die Führung (7) eine geschlossene Schleife bildet.

11. Vorrichtung nach einem der Ansprüche 1 bis 10, wobei die Führung (7) in einer vertikalen Ebene angeordnet ist, und wobei die Rücklauf strecke (22) unterhalb der Arbeitsstrekke (21) mit der Aufgabe- und Abgabestation (2, 3) verläuft.

12. Vorrichtung nach einem der Ansprüche 1 bis 11, wobei die Kette von Spulen (25) aus mindestens zwei trennbaren Abschnitten (24) besteht.

13. Vorrichtung nach einem der Ansprüche 1 bis 12, wobei die Spulen (25) je einen Eisenkern (47) aufweisen.

## Claims

1. Apparatus for transporting products (5) as required between various stations, in particular between a supply station (2) and a discharge station (3), comprising a stationary guide (7) in which a plurality of conveying elements (4) for receiving the products (5) are guided in a movable manner, it being the case that a multiplicity of separately controlled inductors (25), which are arranged one behind the other and have approximately horizontal inductor axes, are arranged on the guide (7), and each conveying element (4) has at least one permanent magnet (27) which, in combination with the inductors (25), forms a linear motor, it being the case that a multiplicity of position sensors (33), which are arranged one behind the other, are arranged on the guide (7) in order to measure the position of the conveying elements (4), it being the case that each conveying element (4) comprises a U-shaped holder (28) with two legs, characterized in that the inductor axes run approximately transversely to the transporting direction, in that the permanent magnets (27), which form the linear motor with the inductors, are fastened on the inside of the legs, and in that the inductors form a comb which projects in between these permanent magnets.

2. Apparatus for transporting products (5) as required between various stations, in particular between a supply station (2) and a discharge station (3), comprising a stationary guide (7) in which a plurality of conveying elements (4) for receiving the products (5) are guided in a movable manner, it being the case that a multiplicity of separately controlled inductors (25), which are arranged one behind the other and have approximately horizontal inductor axes, are arranged on the guide (7), and each conveying element (4) has at least one permanent magnet (27) which, in combination with the inductors (25), forms a linear motor, it being the case that a multiplicity of position sensors (33), which are arranged one behind the other, are arranged on the guide (7) in order to measure the position of the conveying elements (4), characterized in that the inductor axes run approximately transversely to the transporting direction, in that each conveying element (4) has a plate-like leg (28) on which at least one of the permanent magnets (27), which forms the linear motor with the inductors, is fastened, in that in each case a multiplicity of the inductors (25) are arranged on the guide (7), on both sides of the leg (28), and in that the two rows of inductors form a slot into which the leg (28), with the permanent magnet (27), projects.

3. Apparatus according to Claim 1 or 2, it being the case that the conveying elements (4) have a base (35) and side walls (36) transverse to the transporting direction (A).

4. Apparatus according to one of Claims 1 to 3, it being the case that the guide (7) has a rectilinear operating path (21) and two arcuate sections (23) adjoining this on both sides.

5. Apparatus according to one of Claims 1 to 4, it being the case that each conveying element (4) has fastened on it a transmitter element (32), preferably a considerably smaller, additional permanent magnet, and the position sensors (33) interact with said transmitter element (32).

6. Apparatus according to one of Claims 1 to 5, it being the case that each inductor (25) has two sides (40), which are longer than the central spacing between them.

7. Apparatus according to Claim 6, it being the case that, heightwise, the permanent magnet (27) is shorter than the length of the sides of the inductors (25).

8. Apparatus according to one of Claims 1 to 7, it being the case that the inductors (25) are arranged such that they overlap in pairs.

9. Apparatus according to one of Claims 1 to 8, it being the case that in at least one region of the guide (7), in particular in the return region (22), the inductors have a smaller cross section than in an operating path (21) of the guide (7).

10. Apparatus according to one of Claims 1 to 9, it being the case that the guide (7) forms a closed loop.

11. Apparatus according to one of Claims 1 to 10, it being the case that the guide (7) is arranged in a vertical plane, and it being the case that the return path (22) runs beneath the operating path (21) with the supply and discharge stations (2, 3).

12. Apparatus according to one of Claims 1 to 11, it being the case that the chain of inductors (25) comprises at least two separable sections (24).

13. Apparatus according to one of Claims 1 to 12, it being the case that the inductors (25) each have an iron core (47).

## Revendications

1. Dispositif pour le transport de produits (5) selon les besoins entre différentes stations, en particulier entre une station de dépôt (2) et une station d'enlèvement (3), comprenant un guide stationnaire (7), dans lequel plusieurs éléments de transport (4) destinés à recevoir les produits (5) sont guidés en mouvement, dispositif dans lequel une pluralité de bobines (25), commandées séparément et disposées l'une derrière l'autre, sont disposées sur le guide (7) avec des axes de bobine approximativement horizontaux, et chaque élément de transport (4) présente au moins un aimant permanent (27), qui forme un moteur linéaire en combinaison avec les bobines (25), dans lequel une pluralité de détecteurs de position (33) disposés l'un derrière l'autre sont disposés sur le guide (7), pour mesurer la position des éléments de transport (4), dans lequel chaque élément de transport (4) comprend un support (28) en forme de U avec deux branches, caractérisé en ce que les axes des bobines sont orientés à peu près transversalement à la direction de transport, en ce que les aimants permanents (27) formant le moteur linéaire avec les bobines sont fixés intérieurement sur les branches, et en ce que les bobines forment un peigne, qui s'engage entre ces aimants permanents.

2. Dispositif pour le transport de produits (5) selon les besoins entre différentes stations, en particulier entre une station de dépôt (2) et une station d'enlèvement (3), comprenant un guide stationnaire (7), dans lequel plusieurs éléments de transport (4) destinés à recevoir les produits (5) sont guidés en mouvement, dispositif dans lequel une pluralité de bobines (25), commandées séparément et disposées l'une derrière l'autre, sont disposées sur le guide (7) avec des axes de bobine approximativement horizontaux, et chaque élément de transport (4) présente au moins un aimant permanent (27), qui forme un moteur linéaire en combinaison avec les bobines (25), dans lequel une pluralité de détecteurs de position (33) disposés l'un derrière l'autre sont disposés sur le guide (7), pour mesurer la position des éléments de transport (4), caractérisé en ce que les axes des bobines sont orientés à peu près transversalement à la direction de transport, en ce que chaque élément de transport (4) possède une branche (28) en forme de plateau, sur laquelle est fixé au moins un des aimants permanents (27) formant le moteur linéaire avec les bobines, en ce qu'une pluralité des bobines (25) est disposée sur le guide (7) sur chacun des deux côtés de la branche (28), et en ce que les deux séries de bobines forment une fente, dans laquelle s'engage la branche (28) avec l'aimant permanent (27).

3. Dispositif suivant la revendication 1 ou 2, dans lequel les éléments de transport (4) possèdent un fond (35) et des parois latérales (36) transversalement à la direction de transport (A).

4. Dispositif suivant l'une quelconque des revendications 1 à 3, dans lequel le guide (7) possède une zone de travail rectiligne (21) et deux tronçons courbes (23) se raccordant de part et d'autre à celle-ci.

5. Dispositif suivant l'une quelconque des revendications 1 à 4, dans lequel un élément de capteur (32), de préférence un aimant permanent supplémentaire, sensiblement plus petit, est fixé à chaque élément de transport (4), et les détecteurs de position (33) coopèrent avec cet élément de capteur (32).

6. Dispositif suivant l'une quelconque des revendications 1 à 5, dans lequel chaque bobine (25) présente deux branches (40), qui sont plus longues que leur écartement moyen.

7. Dispositif suivant la revendication 6, dans lequel l'aimant permanent (27) est plus court, en hauteur, que la longueur des branches des bobines (25).

8. Dispositif suivant l'une quelconque des revendications 1 à 7, dans lequel les bobines (25) sont disposées par paires avec recouvrement.

9. Dispositif suivant l'une quelconque des revendications 1 à 8, dans lequel les bobines (25) ont, dans au moins une région du guide (7), en particulier dans la région de retour (22), une section transversale plus petite que dans une zone de travail (21) du guide (7).

10. Dispositif suivant l'une quelconque des revendications 1 à 9, dans lequel le guide (7) forme une boucle fermée.

11. Dispositif suivant l'une quelconque des revendications 1 à 10, dans lequel le guide (7) est disposé dans un plan vertical, et dans lequel la région de retour (22) se trouve en dessous de la zone de travail (21) avec les stations de dépôt et d'enlèvement (2, 3).

12. Dispositif suivant l'une quelconque des revendications 1 à 11, dans lequel la chaîne de bobines (25) se compose d'au moins deux tronçons (24) séparables.

13. Dispositif suivant l'une quelconque des revendications 1 à 12, dans lequel les bobines (25) présentent chacune un noyau de fer (47).
